**Europäisches Patentamt**

**European Patent Office**

**Office européen des brevets**

(19)

(11) Veröffentlichungsnummer: **0 106 230**
**B1**

(12)

# EUROPÄISCHE PATENTSCHRIFT

(45) Veröffentlichungstag der Patentschrift:
**16.07.86**

(51) Int. Cl.⁴: **G 02 B 7/18, H 01 S 3/083**

(21) Anmeldenummer: **83109724.1**

(22) Anmeldetag: **29.09.83**

(54) Verfahren zum Anbringen von Resonatorspiegeln bei einem Laser.

(30) Priorität: **06.10.82 DE 3236915**
**21.06.83 DE 3322212**

(43) Veröffentlichungstag der Anmeldung:
**25.04.84 Patentblatt 84/17**

(45) Bekanntmachung des Hinweises auf die Patenterteilung:
**16.07.86 Patentblatt 86/29**

(84) Benannte Vertragsstaaten:
**CH DE FR GB LI**

(56) Entgegenhaltungen:
**GB - A - 1 028 496**
**GB - A - 1 052 395**
**GB - A - 2 059 143**

(73) Patentinhaber: **Bodenseewerk Gerätetechnik GmbH,**
**Alte Nussdorfer Strasse 15 Postfach 1120,**
**D-7770 Überlingen/Bodensee (DE)**

(72) Erfinder: **Bernard, Walter, Dr. Dipl.-Phys., Allmendweg 6,**
**D-7758 Meersburg (DE)**
Erfinder: **Langner, Klaus, Dipl.-FH., Alte Dorfstrasse 61,**
**D-7770 Überlingen 12 (DE)**

(74) Vertreter: **Wolgast, Rudolf, Dipl.-Chem. Dr. et al,**
**Dipl.-Phys. Jürgen Weisse Dipl.Chem. Dr. Rudolf Wolgast**
**Bökenbusch 41 Postfach 11 03 86,**
**D-5620 Velbert 11 Langenberg (DE)**

**Beschreibung**

Die Erfindung betrifft ein Verfahren zum Anbringen und Justieren von Resonatorspiegeln eines Lasers, wobei

(a) ein den Resonatorspiegel tragender Spiegelträger und eine Basis mit genau komplementär zueinander der geschliffenen Flächen versehen werden,

(b) die genannten Flächen in einer ein Ansprengen gestattenden Weise poliert werden,

(c) der Spiegelträger und die Basis mit den komplementär zueinander geschliffenen Flächen aneinandergesetzt werden und

(d) der Spiegelträger durch Ansprengen auf der Basis dauerhaft befestigt wird.

An die Genauigkeit der Ausrichtung von Resonatorspiegeln bei einem Laser werden sehr hohe Anforderungen gestellt. Man kann die Resonatorspiegel zwar justierbar machen und sie entsprechend ausrichten (US-A-3 428 915). In diesem Falle lässt sich aber nicht vermeiden, dass die Justage durch äussere Einflüsse wie Stoss, Vibrationen oder Temperaturschwankungen beeinträchtigt wird. Es ist dann eine Nachjustierung erforderlich, was zeitraubend und bei manchen Anwendungen, z.B. Laserkreiseln, gar nicht praktikabel ist.

Als eine mögliche Lösung des Problems ist bekannt, einen Resonatorblock für einen Ringlaser aus einem Stück hochgenau zu fertigen. Der Resonatorblock besitzt geschliffene Flächen, auf welche die Resonatorspiegel aufgesprengt werden. Die Anordnung der geschliffenen Flächen des Resonatorblocks muss so präzise sein, dass der Ringresonator nach dem Aufsprengen der Resonatorspiegel sofort in Resonanz ist. Eine nachträgliche Justage ist nicht möglich. Das ist sehr aufwendig in der Fertigung und führt zu einem hohen Prozentsatz von Ausschuss.

Ein Ringresonator mit einem Resonatorblock und angesetzten Spiegeln zeigt die DE-A-3 006 977.

Die DE-B-1 191 483 zeigt einen Laser mit Quarzblock, der einen als Resonanzhohlraum dienenden Längskanal bildet. Die gegenüberliegenden Stirnflächen des Quarzblocks sind genau zueinander parallel und senkrecht zur Achse des Längskanals plan geschliffen. An diese Stirnflächen des Quarzblocks sind genau plan geschliffene Quarzblöcke als Spiegelträger angesprengt. Diese Quarzblöcke tragen Spiegelschichten, die so genau senkrecht zur Achse des Längskanals angeordnet sind. Die Ausrichtung der Spiegelschichten hängt dabei von der Genauigkeit ab, mit der die Stirnflächen des Quarzblocks geschliffen sind. Eine Justage ist auch vor dem Ansprengen nicht möglich, da die Spiegelebenen in den planen Kontaktflächen der Teile liegen.

Durch die US-A-3 566 302 ist ein Verfahren zum Anbringen von Resonatorspiegeln bei einem Laser bekannt, bei dem ein Spiegelträger im wesentlichen abgeschnitten-halbkugelige Form besitzt und in eine komplementär dazu konkav-sphärische Fläche eines den Resonanzhohlraum bildenden Gefässes eingesetzt wird. Der Resonatorspiegel ist auf einer Planfläche des Spiegelträgers gebildet. Durch die sphärischen Flächen kann eine Ausrichtung und Justage des Spiegelträgers und des Resonatorspiegels relativ zu dem Gefäss und dem Resonanzhohlraum erfolgen. In justiertem Zustand, wenn ein Laserstrahl sich ausbildet, wird der Spiegelträger fixiert. Zu diesem Zweck ist die konkav-sphärische Fläche aufgerauht. Zwischen die komplementären sphärischen Flächen des Spiegelträgers und des Gefässes ist ein erhärtendes Dichtmittel eingebracht. Solange das Dichtmittel noch weich ist, kann eine Justage des Spiegelträgers erfolgen. Die Fixierung erfolgt durch das Erhärten des Dichtmittels.

Durch die DE-A-2 442 888 ist ein Laserresonator bekannt, bei welchem ein Ausgangsspiegel und ein Littrow-Prisma mit einem Glasgefäss durch Glaslotdichtungen verbunden sind. Während der Fliesszeit der Glaslotdichtungen können der Ausgangsspiegel und das Littrow-Prisma ausgerichtet werden.

Durch die GB-A-1 028 496 ist ein Glaslaser bekannt, bei welchem ein Resonanzhohlraum von einem geraden, durchgehenden Kanal in einem Quarzblock gebildet ist. Der Kanal mündet in konvex-sphärischen Stirnflächen. Spiegelträger mit komplementär dazu konkav-sphärischen Flächen sind an diese konvex-sphärischen Stirnflächen angesprengt. Diese Spiegelträger bilden mit ihren konkav-sphärischen Flächen, die mit einer Spiegelschicht versehen sind, Hohlspiegel, welche den Resonanzhohlraum begrenzen. Die Hohlspiegel sind durch dielektrische Schichten gegen den Kanal abgedeckt. Eine Justage der Hohlspiegel ist dort weder vorgesehen noch möglich. Eine Bewegung der Spiegelträger auf den konvex-sphärischen Stirnflächen des Quarzblocks würde nämlich an der Geometrie der Spiegel nichts ändern, da die Spiegelfläche mit der Lagerfläche zusammenfällt.

Der Erfindung liegt die Aufgabe zugrunde, mit möglichst geringem Aufwand Resonatorspiegel bei einem Lager mit hoher Genauigkeit zu justieren und sie in der einmal justierten Lage zu fixieren, ohne dass die einmal erfolgte Justage durch thermische oder mechanische Einflüsse wieder gestört werden kann.

Erfindungsgemäss wird diese Aufgabe dadurch gelöst, dass

(e) die genannten Flächen und der Resonatorspiegel so an der Basis und dem Spiegelträger angebracht werden, dass eine Gleitbewegung dieser Flächen aufeinander eine Winkelverstellung des Resonatorspiegels relativ zum Laserstrahl gestattet,

(f) der Spiegelträger mit dem Resonatorspiegel nach dem Aneinandersetzen relativ zu der Basis justiert wird und

(h) zum Einleiten des Ansprengvorganges eine gut benetzende, schnell verdampfende Hilfsflüssigkeit an den Rand des zwischen den besagten polierten, komplementären Flächen gebildeten Spaltes gegeben wird, wobei die Hilfsflüssigkeit sich durch die Kapillarwirkung des Spaltes verteilt und nach dem Abdampfen der Hilfsflüssigkeit der Spiegelträger an die Basis angesprengt ist.

Nach der Erfindung werden die Flächen genau komplementär zueinander geschliffen und in unmittelbaren Kontakt miteinander gebracht, d.h. in Kontakt ohne Zwischenschaltung eines Dichtmittels, Lots oder Klebers. Mit diesem direkten Kontakt erfolgt die Fixierung. Dadurch ist die Gewähr gegeben, dass die hochgenaue Ausrichtung erhalten bleibt, auch bei Temperaturschwankungen. Die Einleitung des Ansprengvorganges mittels einer schnell verdampfenden Hilfsflüssigkeit stellt sicher, dass keine Dejustage durch mechanische Störungen beim Ansprengen eintreten kann.

Bei der vorerwähnten DE-B-1 191 483 ist zwar ein Ansprengen des Spiegelträgers, d.h. ein unmittelbarer Kontakt der Flächen vorgesehen. Es ist jedoch keine Justagemöglichkeit gegeben. Die Flächen, nämlich die Stirnflächen des Quarzblocks und die dazu komplementären Planflächen der Spiegelträger sind nicht so ausgebildet oder relativ zu den Spiegeln angeordnet, dass etwa durch eine Gleitbewegung dieser Flächen aufeinander vor dem Ansprengen eine Justage möglich ist. Das gleiche gilt für die GB-A-1 028 496.

Bei der US-A-3 566 302 sind die Flächen nicht genau komplementär zueinander geschliffen. Vielmehr ist wenigstens eine der Flächen aufgerauht, und es ist eine Schicht von Dichtmitteln zwischen den Flächen vorgesehen.

Ebenso sind bei der DE-A-2 442 888 nicht zwei geschliffene Flächen miteinander in unmittelbarem Kontakt, sondern die Flächen sind mit einem Glaslot verbunden. Eine Justagemöglichkeit ist dort nicht durch die Geometrie der Flächen gegeben sondern nur durch die Verformbarkeit des Glaslots.

Ringresonatoren, bei denen die Resonatorspiegel nach dem erfindungsgemässen Verfahren justierbar und fixierbar gehaltert werden, sind Gegenstand der Ansprüche 2 bis 4.

Ausführungsbeispiele von Ringresonatoren sind nachstehend unter Bezugnahme auf die zugehörigen Zeichnungen näher erläutert:

Fig. 1 zeigt eine Draufsicht auf eine Resonatorspiegelanordnung.

Fig. 2 zeigt eine Vorderansicht eines Spiegelträgers mit einem planen Resonatorspiegel.

Fig. 3 zeigt eine Draufsicht auf einen Spiegelträger mit einem als Hohlspiegel ausgebildeten Resonatorspiegel und veranschaulicht die winkelmässige Justage.

Fig. 4 zeigt eine Vorderansicht eines Spiegelträgers mit einem als Hohlspiegel ausgebildeten Resonatorspiegel und veranschaulicht die Seiten- und Höhenjustage.

Fig. 5 veranschaulicht die Wirkung einer Seiten- oder Höhenjustage des Hohlspiegels auf den Auftreffpunkt des Bündels.

Fig. 6 zeigt in Seitenansicht eine andere Ausführungsform der Halterung eines Resonatorspiegels an einem Spiegelträger.

Fig. 7 ist eine zugehörige Vorderansicht.

Fig. 8 veranschaulicht die Einleitung des Ansprengvorgangs.

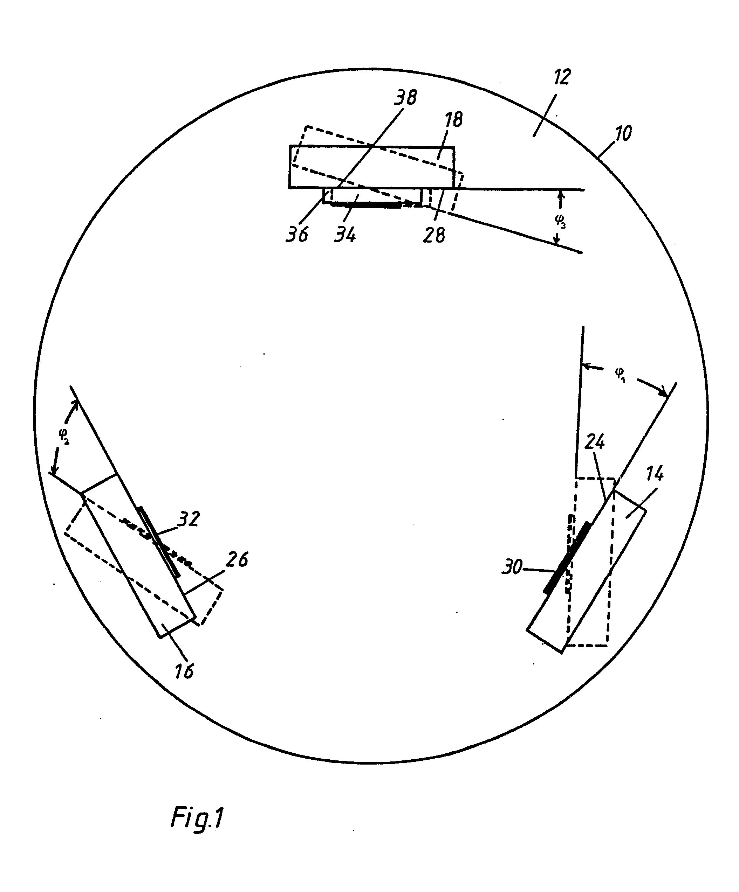

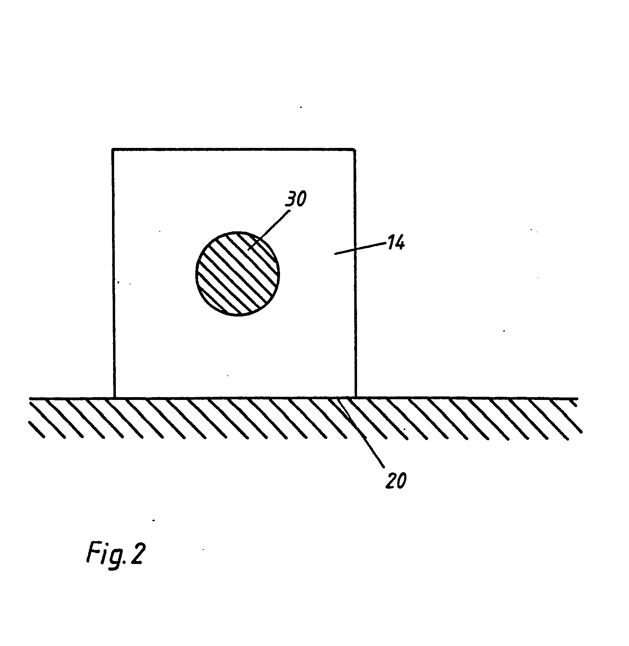

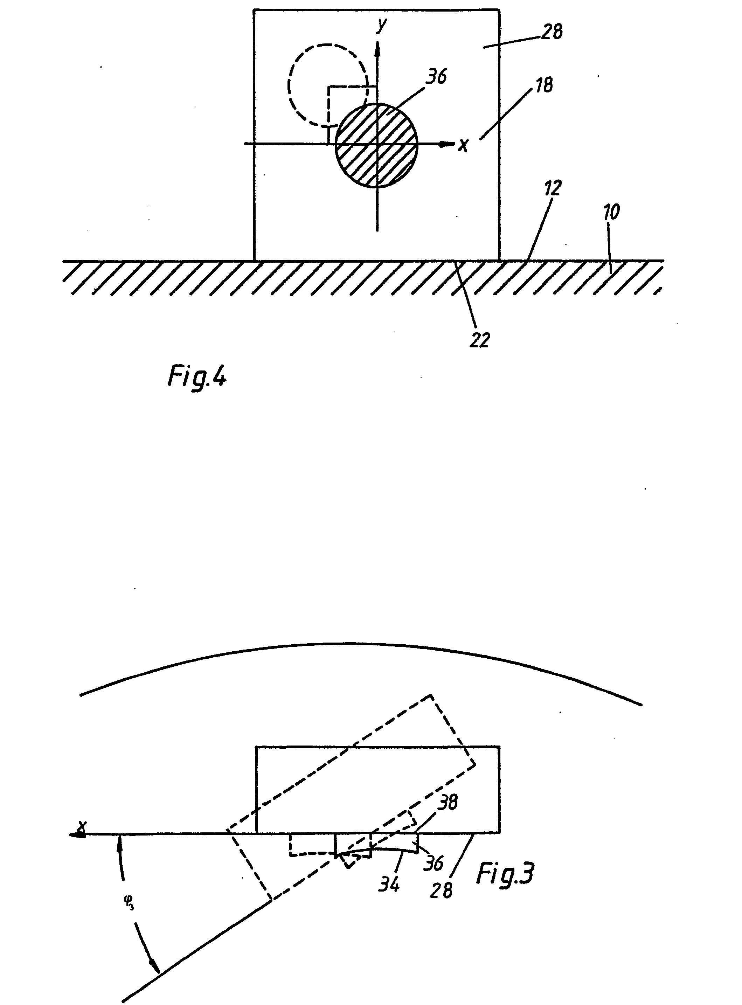

In Fig. 1 ist mit 10 eine Basis mit einer plan geschliffenen Fläche 12 bezeichnet. Auf der Basis 10 sitzen bei der dargestellten Ausführungsform drei Spiegelträger 14, 16, 18. Die Spiegelträger 14, 16, 18 liegen jeweils mit einer plan geschliffenen Fläche 20 bzw. 22 (Fig. 2 und 4) an der plan geschliffenen Fläche 12 der Basis 10 an. Die Spiegelträger 14, 16, 18 weisen eine zweite plan geschliffene Fläche 24, 26 bzw. 28 auf, die senkrecht zu der an der Basis 10 anliegenden, plan geschliffenen Fläche 20 bzw. 22 verläuft. Die Resonatorspiegel 30, 32 und 34 sind an den jeweiligen zweiten plan geschliffenen Flächen 24, 26 bzw. 28 angebracht. Die Resonatorspiegel 30 und 32 sind Planspiegel. Der Resonatorspiegel 34 ist ein Hohlspiegel. Der Krümmungsradius dieses Hohlspiegels ist in üblicher Weise auf die Lage des Resonators abgestimmt. Die Planspiegel 30 und 32 können von einer unmittelbar auf die zweite plan geschliffene Fläche 24 oder 26 aufgedampften Spiegelschicht gebildet sein. Die Spiegelschicht kann aber auch auf einem Glasträger sitzen, der an die zweite plan geschliffene Fläche 24 oder 26 angesprengt ist. Der Hohlspiegel 34 ist seinerseits an einem Hohlspiegelkörper 36 mit plan geschliffener Rückfläche 38 vorgesehen. Der Hohlspiegelkörper 36 liegt mit der Rückfläche 38 an der zweiten plan geschliffenen Fläche 28 des Spiegelträgers 18 an und ist an dieser nach Justierung in der Ebene dieser Fläche 28 fixiert.

Die Spiegelträger 14, 16, 18 werden mit einer geschliffenen Fläche, nämlich der plan geschliffenen Fläche 20 bzw. 22 an eine ebenfalls geschliffene Fläche, nämlich die plan geschliffene Fläche 12 der Basis 10 angesetzt. Die Spiegelträger 14, 16, 18 mit den Resonatorspiegeln 30, 32 bzw. 34 werden dann relativ zur Basis 10 justiert. Das geschieht zweckmässigerweise mittels geeigneter Manipulatoren. Die Justage mit den (übertrieben gezeichneten) Justagewinkeln $\varphi_1$, $\varphi_2$ und $\varphi_3$ ist in Fig. 1 durch die gestrichelt gezeichneten Stellungen der Spiegelträger 14, 16, 18 angedeutet. Danach werden die Spiegelträger 14, 16 und 18 in den justierten Stellungen durch einen noch zu beschreibenden Ansprengvorgang dauerhaft fixiert. Die Manipulatoren können entfernt werden.

Die Fixierung der Spiegelträger 14, 16 und 18 erfolgt durch Ansprengen. Spiegelträger 14, 16, 18 und Basis 10 bestehen aus gleichen Werkstoffen. Bei dem bevorzugten Ausführungsbeispiel bestehen die Spiegelträger 14, 16 und 18 und die Basis 10 aus einem Werkstoff extrem geringer thermischer Ausdehnung (z.B. «Zerodur»). Die geschliffenen Flächen 12 und 20 bzw. 22 sind gut gereinigt. Sie können zu Justagezwecken zunächst aufeinander gleiten, wobei eine Luftschicht zwischen den Flächen 12 und 20 bzw. 22 einen Gleitfilm bildet. Wenn die richtige Justierung erreicht ist, werden die Spiegelträger 14, 16 und 18 in noch zu beschreibender Weise angesprengt. Dadurch wird der Gleitfilm aus Luft zwischen den zu verbindenden Flächen 12 und 20 bzw. 22 entfernt. Das bewirkt eine dauerhafte Verbindung der Teile 10 und 14, 16, 18 durch Molekularkräfte. Diese Verbindung ist unempfindlich gegen mechanische Einflüsse wie Stösse oder Vibrationen und gegen die üblichen Temperaturschwankungen. Es ist allerdings möglich die Verbindung wieder zu lösen, indem auf einen der Teile eine sehr starke mechanische Spannung aufgebracht wird.

Wie aus Fig. 3 und 4 ersichtlich ist, ist der Hohlspiegelkörper 36 nicht nur mit dem Spiegelträger 18 winkelmässig justiert. Er ist auch in zwei Koordinaten x und y translatorisch justierbar, indem der Hohlspiegelkörper 36 auf der plan geschliffenen Fläche 28 verschoben und in der richtigen Justierstellung durch Ansprengen fixiert wird. Das ist in Fig. 3 und 4 in gestrichelten Linien angedeutet.

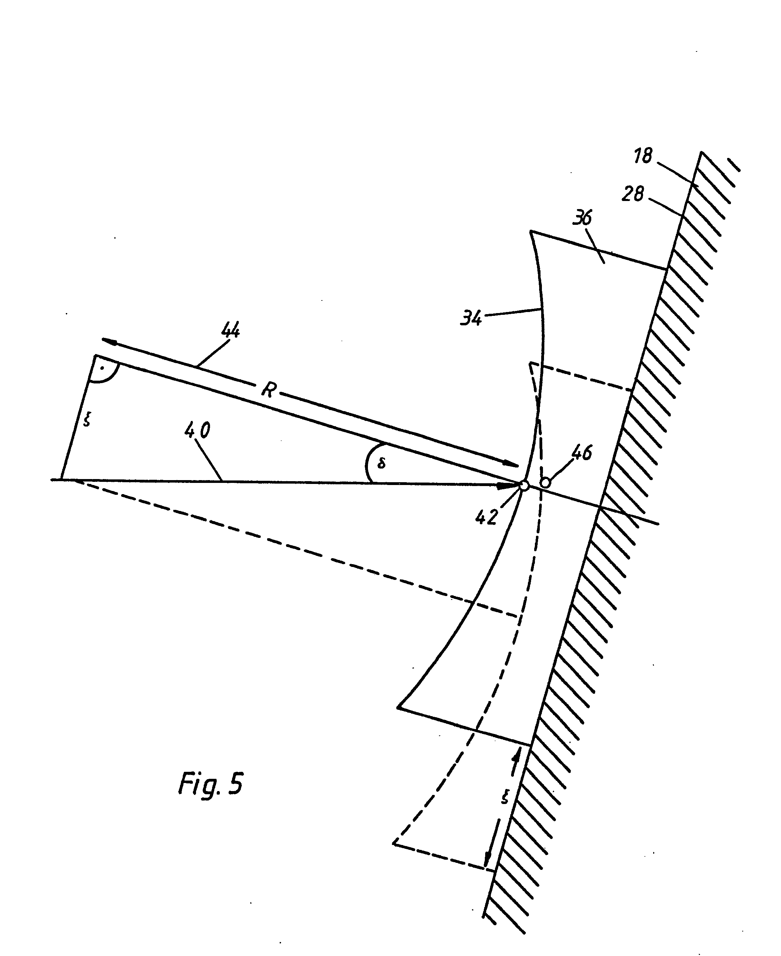

Fig. 5 zeigt die Wirkung einer solchen translatorischen Verschiebung auf einen Winkelfehler δ in der Horizontalebene.

Mit 40 ist ein in der Sagittalebene einfallender Strahl bezeichnet. Der Strahl 40 fällt im Scheitelpunkt 42 auf den Hohlspiegel 34 und bildet mit der Flächennormale 44 einen Winkel δ. Er wird also unter einem Winkel δ nach der anderen Seite der Flächennormalen wieder reflektiert. Soll der Winkel δ korrigiert werden, der Strahl also in der Ebene des einfallenden Strahls 40 zurückgeworfen werden, so ist dazu eine Verschiebung des Hohlspiegels 34 um die Strecke ξ in die gestrichelt dargestellte Stellung erforderlich. Dann trifft der Strahl 40 im Punkt 46 in der Draufsicht gesehen senkrecht auf den Hohlspiegel 36. Es gilt (für kleine δ) näherungsweise

$$\xi = R \tan \delta,$$

wobei R der Krümmungsradius des Hohlspiegels 34 ist. In ähnlicher Weise können Winkelfehler in der Vertikalebene durch eine vertikale Justage des Hohlspiegels 34 ausgeglichen werden.

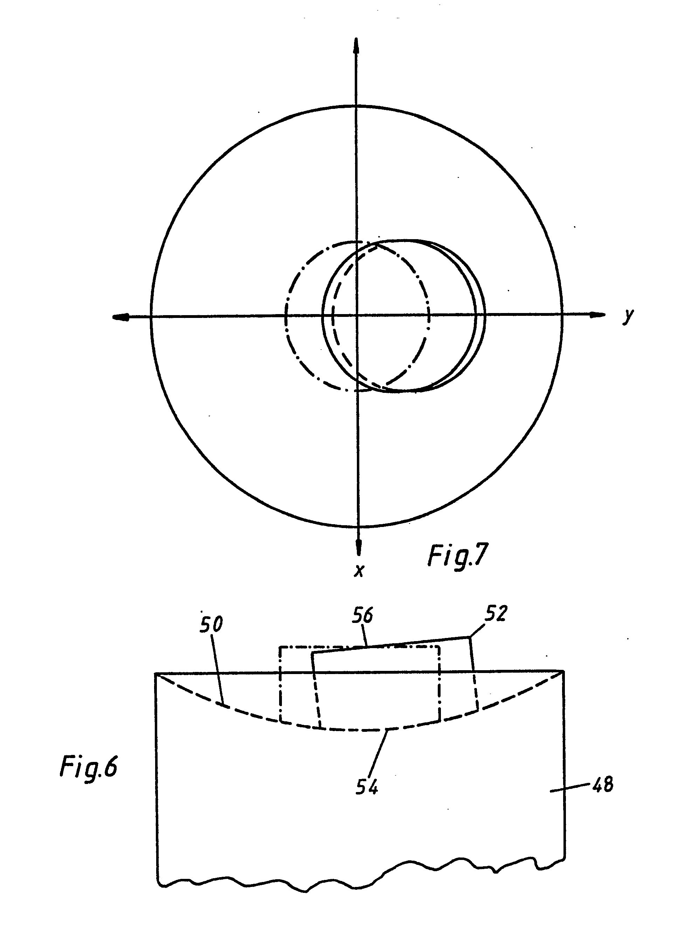

Bei der Ausführungsform nach Fig. 6 und 7 ist mit 48 eine Basis bezeichnet. Die Basis 48 weist eine sphärisch-konkav geschliffene Fläche 50 auf. Ein Spiegelträger 52 liegt mit einer komplementär dazu sphärisch-konvex geschliffenen Fläche 54 an der sphärisch-konkav geschliffenen Fläche 50 der Basis 48 an. Der Spiegelträger 52 trägt auf einer Planfläche 56 einen (nicht dargestellten) Resonatorspiegel. Durch Verschiebung des Spiegelträgers 52 auf der Fläche 50 in horizontaler oder vertikaler Richtung kann der Resonatorspiegel in zwei Ebenen winkelmässig justiert werden.

Auch hier erfolgt zunächst die Justage mittels eines Manipulators, wobei die Flächen 50 und 54 mit einer dünnen Luftschicht dazwischen aufeinander gleiten. Im justierten Zustand wird dann der Spiegelträger 52 an die Basis 48 in der nachstehend beschriebenen Weise angesprengt.

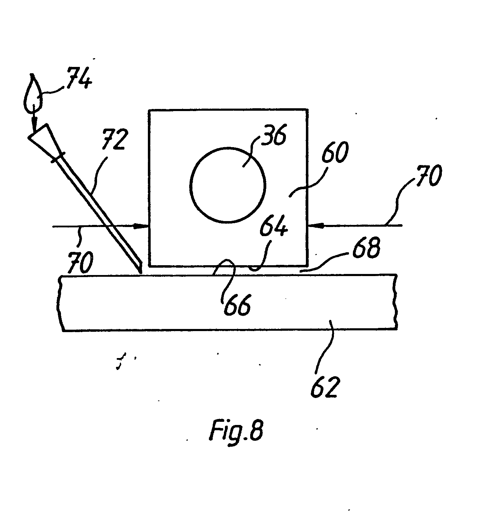

Das Ansprengen ist nachstehend unter Bezugnahme auf Fig. 8 beschrieben.

Zwei durch optisches Ansprengen miteinander zu verbindende Teile sind mit 60 und 62 bezeichnet. Teil 60 ist ein Spiegelträger und Teil 62 eine Basis. Die beiden Teile 60 und 62 besitzen zwei einander zugewandte Oberflächen 64 und 66, die im vorliegenden Fall plan sind. Diese Oberflächen 64 und 66 sind in bekannter Weise für das Ansprengen vorbereitet. Sie sitzen zunächst so aufeinander, dass zwischen ihnen ein sehr enger Spalt 68 von einigen Nanometer gebildet wird. Dieser Spalt 68 gestattet ein Verschieben und eine Justage der Teile 60 und 62 zueinander mittels eines Manipulators, der in Fig. 8 durch die Pfeile 70 angedeutet ist.

Wenn die gewünschte Endposition der Teile 60 und 62 zueinander erreicht ist, werden mittels einer Spritzkanüle 72 einige Tropfen einer Hilfsflüssigkeit auf den Rand des Spaltes 68 gegeben. Die Verteilung der Hilfsflüssigkeit über den gesamten Spalt 68 erfolgt durch die Kapillarwirkung des Spaltes 68. Durch das Einbringen dieser Hilfsflüssigkeit wird der Ansprengvorgang eingeleitet. Es hat sich gezeigt, dass nach einiger Zeit (Abdampfphase) der Teil 60 fest an den Teil 62 angesprengt ist. Es braucht dazu kein Druck auf den Teil 60 ausgeübt zu werden, der die Justierung stören könnte.

Die Hilfsflüssigkeit ist ein gut benetzendes, schnell verdampfendes Lösungsmittel. In der Praxis hat sich Aceton als sehr geeignet erwiesen.

Die umlaufende Begrenzung der Verbindung kann durch einen Lack, z.B. Nitrolack, gegen Unterkriechen gesichert werden.

## Patentansprüche

1. Verfahren zum Anbringen und Justieren von Resonatorspiegeln eines Lasers, wobei

(a) ein einen Resonatorspiegel (30, 32, 34) tragender Spiegelträger (14, 16, 18; 60) und eine Basis (10) mit genau komplementär zueinander geschliffenen Flächen (20, 22 bzw. 12; 64, 66) versehen werden,

(b) die genannten Flächen (20, 22 bzw. 12; 64, 66) in einer ein Ansprengen gestattenden Weise poliert werden,

(c) der Spiegelträger (14, 16, 18; 60) und die Basis (10) mit den komplementär zueinander geschliffenen Flächen (20, 22 bzw. 12; 64, 66) aneinandergesetzt werden und

(d) der Spiegelträger (14, 16, 18; 60) durch Ansprengen auf der Basis (10; 62) dauerhaft befestigt wird, dadurch gekennzeichnet, dass

(e) die genannten Flächen (20, 22 bzw. 12; 64, 66) und der Resonatorspiegel (30, 32, 34) so an der Basis und dem Spiegelträger (14, 16, 18; 60) angebracht werden, dass eine Gleitbewegung dieser Flächen (20, 22 bzw. 12; 64, 66) aufeinander eine Winkelverstellung des Resonatorspiegels (30, 32, 34) reativ zum Laserstrahl gestattet,

(f) der Spiegelträger (14, 16, 18; 60) mit dem Resonatorspiegel (30, 32, 34) nach dem Aneinandersetzen relativ zu der Basis (10; 62) justiert wird und

(h) zum Einleiten des Ansprengvorganges eine gut benetzende, schnell verdampfende Hilfsflüssigkeit an den Rand des zwischen den besagten polierten, komplementären Flächen (20, 22 bzw. 12; 64, 66) gebildeten Spaltes (68) gegeben wird, wobei die Hilfsflüssigkeit sich durch die Kapillarwirkung des Spaltes (68) verteilt und nach dem Abdampfen der Hilfsflüssigkeit der Spiegelträger (14, 16, 18; 60) an die Basis (10; 62) angesprengt ist.

2. Ringlaser mit Resonatorspiegel, angebracht nach dem Verfahren gemäss Anspruch 1, dadurch gekennzeichnet, dass

(a) die Basis (10) als die eine der besagten komplementären Flächen eine plan geschliffene Fläche (12) aufweist,

(b) eine Mehrzahl von Spiegelträgern (14, 16, 18) jeweils als die andere der besagten komplementären Flächen je eine erste plan geschliffene Fläche (20, 22) aufweisen, die an der plan geschliffenen Fläche (12) der gemeinsamen Basis (10) anliegen,

(c) jeder der Spiegelträger (14, 16, 18) eine zweite plan geschliffene Fläche (24, 26, 28) aufweist, die senkrecht zu der an der Basis (10) anliegenden, ersten plan geschliffenen Fläche (20, 22) verläuft und

(d) an den zweiten plan geschliffenen Flächen (24, 26, 28) je ein Resonatorspiegel (30, 32, 34) angebracht ist.

3. Ringlaser nach Anspruch 2, dadurch gekennzeichnet, dass

(a) einer der Resonatorspiegel (34) ein Hohlspiegel ist und

(b) der Hohlspiegel (34) seinerseits an einem Hohlspiegelkörper (36) mit einer plan geschliffenen Fläche (38) vorgesehen ist und

(c) der Hohlspiegelkörper (36) mit dieser Fläche (38) an der zweiten plan geschliffenen Fläche (28) des Spiegelträgers (18) anliegt und an dieser nach Justierung in der Ebene dieser Fläche (28) an die Fläche angesprengt ist.

4. Ringlaser mit Resonatorspiegel, angebracht nach dem Verfahren gemäss Anspruch 1, dadurch gekennzeichnet, dass

(a) die Basis (48) eine sphärisch-konkav geschliffene Fläche (50) als eine der besagten komplementären Flächen aufweist,

(b) der Spiegelträger (52) auf einer Seite eine komplementär zu dieser sphärisch-konkaven Fläche sphärisch-konvex geschliffene Fläche aufweist, welche als die andere der besagten komplementären Flächen an der sphärisch-konkaven Fläche (50) der Basis (48) anliegt, und auf der gegenüberliegenden Seite der Resonatorspiegel montiert ist.


**Claims**

1. Method for mounting and adjusting cavity mirrors of a laser, wherein

(a) a mirror support (14, 16, 18; 60) supporting a cavity mirror (30, 32, 34) and a base (10) are provided with surfaces (20, 22 and 12; 64, 66, respectively) ground exactly complementary to each other,

(b) said surfaces (20, 22 and 12; 64, 66, respectively) are polished in a way permitting attachement by optical contact,

(c) the mirror support (14, 16, 18; 60) and the base (10) (20, 22 and 12; 64, 66, respectively) are placed into contact with the surfaces (20, 22 and 12; 64, 66, respectively) ground complementary to each other, and

(d) the mirror support (14, 16, 18; 60) is permanently fixed on the base (10; 62) by attachement by optical contact, characterized in that

(e) said surfaces (20, 22 and 12; 64, 66 respectively) and the cavity mirror (30, 32, 34) are mounted on the base and the mirror support (14, 16, 18; 60) such that a sliding movement of these surfaces (20, 22 and 12; 64, 66, respectively) on each other permits an angular displacement of the cavity mirror (30, 32 34) relative to the laser beam,

(f) the mirror support (14, 16, 18; 60) with the cavity mirror (30, 32, 34) is adjusted relative to the base (10; 62) after having been placed on each other, and

(h) for introducing the procedure of attachement by optical contact, a well wetting and quickly evaporating auxiliary liquid is given onto the border of the slot (68) formed between said polished complementary surfaces (20, 22 and 12; 64, 66, respectively), the auxiliary liquid spreading by the capillary effect of the slot (68) and once the auxiliary liquid has been evaporized, the mirror support (14, 16, 18; 60) is attached by optical contact to the base (10; 62).

2. Annular laser having a cavity mirror mounted in accordance with the method according to claim 1, characterized in that

(a) the base (10) has a planarly ground surface (12) as one of said complementary surfaces,

(b) a plurality of mirror supports (14, 16, 18) have as the other one of said complementary surfaces a first planarly ground surface (20, 22) each which engage the planarly ground surface (12) of the common base (10),

(c) each of the mirror supports (14, 16, 18) has a second planarly ground surface (24, 26, 28) which extends perpendicularly to the first planarly ground surface (20, 22) engaging the base (10), and

(d) one cavity mirror each (30, 32, 34) is mounted at the second planarly ground surfaces (24, 26, 28).

3. Annular laser as set forth in claim 2, characterized in that

(a) one of the cavity mirrors (34) is a concave mirror, and

(b) the concave mirror (34) itself is provided at a concave mirror body (36) having a planarly ground surface (38), and

(c) the concave mirror body (36) engages with this surface (38) the second planarly ground surface (28) of the mirror support (18) and is attached thereto by optical contact after having been adjusted in the plane of this surface (28).

4. Annular laser having a cavity mirror mounted in accordance with the method according to claim 1, characterized in that

(a) the base (48) has a sphericly concavely ground surface (50) as one of said complementary surfaces,

(b) the mirror support (52) has on one side a sphericly convexly ground surface complementary to this spheric concave surface and engaging as the other one of said complementary surfaces the spheric concave surface (50) of the base (48), and the cavity mirror is mounted on the other side.


**Revendications**

1. Procédé pour fixer et ajuster des miroirs de la cavité d'un laser, où

(a) un support de miroir (14, 16, 18; 60) portant un miroir de la cavité (30, 32, 34) et une base (10)

sont pourvus de surfaces (20, 22 et 12; 64, 66) égrisées de sorte à se compléter exactement,

(b) lesdites surfaces (20, 22 et 12; 64, 66) sont polies de sorte à permettre un attachement par contact optique,

(c) le support de miroir (14, 16, 18; 60) et la base (10) avec les surfaces (20, 22 et 12; 64,66) égrisées de sorte à se compléter, sont placées l'une contre l'autre, et

(d) le support de miroir (14, 16, 18; 60) est fixé de manière permanente sur la base (10; 62) par attachement par contact optique, caractérisé par le fait que

(e) lesdites surfaces (20, 22 et 12; 64, 66) et le miroir de la cavité (30, 32, 34) sont fixés sur la base et le support de miroir (14, 16, 18; 60) de sorte qu'un mouvement glissant de ces surfaces (20, 22 et 12; 64, 66) l'une sur l'autre permet un déplacement angulaire du miroir de la cavité (30, 32, 34) relatif au rayon laser,

(f) le support de miroir (14, 16, 18; 60) avec le miroir de la cavité (30, 32, 34) est ajusté relativement à la base après avoir placé l'un contre l'autre, et

(h) afin d'introduire le procédé d'attachement par contact optique, un liquide auxiliaire bien mouillant et s'évaporisant rapidement est mis au bord de la fente (68) formée entre les surfaces polies complémentaires (20, 22 et 12; 64, 66), le liquide auxiliaire se répandant grâce à l'effet capillaire de la fente (68), et après l'évaporisation du liquide auxiliaire le support de miroir (14, 16, 18; 60) est attaché par contact optique à la base (10; 62).

2. Laser annulaire avec un miroir de la cavité, fixé conformément au procédé selon la revendication 1, caractérisé par le fait que

(a) la base (10) présente comme l'une des surfaces complémentaires, une surface égrisée plane (12),

(b) plusieurs supports de miroir (14, 16, 18) présentent comme l'autre desdites surfaces complémentaires, chacun une première surface égrisée plane (20, 22), qui sont appliquées à la surface égrisée plane (12) de la base commune (10),

(c) chacun des supports de miroir (14, 16, 18) présente une deuxième surface égrisée plane (24, 26, 28) qui s'étend verticalement à la première surface égrisée plane (20, 22) appliquée à la base (10), et

(d) un miroir de la cavité à la fois (30, 32, 34) est fixé à la deuxième surface égrisée plane (24, 26, 28).

3. Laser annulaire selon la revendication 2, caractérisé par le fait que

(a) l'un des miroirs de la cavité (34) est un miroir concave, et

(b) le miroir concave (34) de son côté est prévu sur un corps de miroir concave (36) ayant une surface égrisée plane (38), et

(c) le corps de miroir concave (36) est appliquée avec cette surface (38) à la deuxième surface égrisée plane (28) du support de miroir (18), et il est attaché par contact optique à celle-ci après l'ajustement dans le plan de cette surface.

4. Laser annulaire avec un miroir de la cavité, fixé conformément au procédé selon la revendication 1, caractérisé par le fait que

(a) la base (10) présente une surface (50) égrisée en forme sphérique concave comme l'une desdites surfaces complémentaires,

(b) le support de miroir (52) présente sur un côté une surface égrisée en forme sphérique convexe complémentaire à la surface sphérique concave, et qui est appliquée comme l'autre desdites surfaces complémentaires à la surface sphérique concave (50) de la base (48), et sur le côté opposé est monté le miroir de la cavité.

*Fig.1*

*Fig. 2*

**Fig.4**

**Fig.3**

Fig. 5

Fig.7

Fig.6

*Fig.8*